# EUROPÄISCHE PATENTANMELDUNG

(11) **EP 1 174 785 A2**
(43) Veröffentlichungstag der Anmeldung: **23.01.2002**
(21) Anmeldenummer: 01114929.1
(22) Anmeldetag: 20.06.2001
(51) Int. Cl.: G06F 1/00, G06F 17/60, H04L 29/06

(54) **Verfahren zum Berechnen von Softwarelizenzen**

(30) Priorität: 01.07.2000 DE 10032192
(71) Anmelder: ROBERT BOSCH GMBH, 70442 Stuttgart (DE)
(72) Erfinder: Decker, Heinz, 71665 Vaihingen (DE); Endermann, Rolf, 73230 Kirchheim (DE); Frey, Bernd, 73230 Kirchheim (DE); Fellhauer, Michael, 73312 Gerlingen (DE)

(57) **Zusammenfassung**

Die Erfindung bezieht sich auf ein Verfahren zum Berechnen von Softwarelizenzen, bei dem in einem mit der Software arbeitenden Rechner bei Benutzung der Software überprüft wird, ob ein zugeteiltes Kontingent noch freie Benutzungsberechtigungen besitzt oder erschöpft ist. Eine für den Anbieter und den Anwender günstige Vorgehensweise zur Berechnung der Nutzungsvergütung wird dadurch erreicht, dass als Kontingent von dem Rechner eine Anzahl frei gegebener Operationen und/oder ein Nutzungszeitraum zur Verfügung gestellt wird, dass in dem Rechner mit Zuteilung des Kontingents ein Freigabecode wirksam wird und parallel zur Abarbeitung des Kontingents mit Nutzung der Software ein Nutzungsnachweis gespeichert und mit jeder weiteren Nutzung der Software ergänzt wird und dass auf Anforderung eines Anwenders, der Nutzungsnachweis ausgegeben wird, oder bei Erschöpfung des Kontingents von dem Rechner ein Sperrcode erzeugt wird und dass auf dem in Form eines Nutzungsprotokolls ausgegebenen Nutzungsnachweis der Sperrcode vermerkt wird.

## Beschreibung

### Stand der Technik

Die Erfindung bezieht sich auf ein Verfahren zum Berechnen von Softwarelizenzen, bei dem in einem mit der Software arbeitenden Rechner bei Benutzung der Software überprüft wird, ob ein zugeteiltes Kontingent noch freie Benutzungsberechtigungen besitzt oder erschöpft ist.

Ein Verfahren dieser Art ist in der WO 96/35193 angegeben. Bei diesem bekannten Verfahren wird für den Aufruf bestimmter, kostenpflichtiger Funktionen bei der Anwendung einer Software ein festgelegter Betrag berechnet, und eine entsprechende Anzahl von Nutzungseinheiten wird von einem vorher befüllten Konto-Speicher, auf z.B. einer Karte, einer Festplatte oder einem Zusatzgerät abgebucht. Aus der Summe der Abbuchungen ergibt sich ein nutzungsabhängiger Preis für die Software. Zur Befüllung des Konto-Speichers im Gerät des Kunden bestellt dieser eine von ihm festgelegte Anzahl von Nutzungseinheiten. Die Zubuchung der bestellten Anzahl von Nutzungseinheiten zu dem Konto-Speicher im Gerät erfolgt z.B. durch Eingabe eines per Telefon oder Fax an den

Kunden zurück gesendeten Antwort-Codes, der zu einem zuvor erzeugten Bestellcode passen muss. Gleichzeitig erhält der Anwender von dem Anbieter eine Rechnung, mit dem sich ergebenden Rechnungsbetrag für die bestellten Nutzungseinheiten. Bei dieser Vorgehensweise bezahlt der Kunde neue Nutzungseinheiten im Voraus, ohne zu wissen, wann er sie tatsächlich aufbrauchen kann.

Der Erfindung liegt die Aufgabe zugrunde, ein Verfahren der eingangs angegebenen Art bereitzustellen, bei dem der Anwender ohne finanzielle Vorleistung die Software nutzen kann, andererseits aber die Zahlung einer Nutzungsgebühr für den Anbieter gewährleistet ist.

Diese Aufgabe wird mit den Merkmalen des Anspruchs 1 gelöst. Hiernach ist vorgesehen, dass als Kontingent von dem Rechner eine Anzahl freigegebener Operationen und/oder ein Nutzungszeitraum zur Verfügung gestellt wird, dass in dem Rechner mit Zuteilung des Kontingents ein Freigabecode wirksam wird und parallel zur Abarbeitung des Kontingents mit Nutzung der Software ein Nutzungsnachweis gespeichert und mit jeder weiteren Nutzung der Software ergänzt wird und dass auf Anforderung eines Anwenders, den Nutzungsnachweis auszugeben, oder bei Erschöpfung des Kontingents von dem Rechner ein Sperrcode erzeugt wird und dass auf dem in Form eines Nutzungsprotokolls ausgegebenen Nutzungsnachweis der Sperrcode vermerkt wird.

Nach Installation der Software bei dem Anwender ist ein uneingeschränktes Arbeiten mit der Software über einen vorher vereinbarten Zeitraum und/oder eine vorher festgelegte Anzahl von kostenpflichtigen Operationen möglich. Ist die Zeitgrenze und/oder die Anzahl von Operationen erreicht, so ist die Software nicht mehr oder nur noch in eingeschränktem Funktionsumfang verfügbar.

Der Anwender kann die Software aber problemlos wieder in vollem Umfang nutzen, wenn der Sperrcode durch einen von dem Anbieter zur Verfügung gestellten Freigabecode ersetzt wird. Dazu braucht der Anwender lediglich den im Rechner parallel zur Nutzung erstellten Nutzungsnachweis ausgeben zu lassen und als Nutzungsprotokoll mit dem Sperrcode dem Anbieter zu übermitteln, beispielsweise mit Fax oder einer Datenfernübertragung (DFÜ). Aufgrund des Nutzungsprotokolls stellt der Anbieter dem Anwender eine Rechnung für die Nutzung aus und übermittelt ihm einen neuen Freigabecode. Mit diesem Verfahren bezahlt der Anwender erst, nachdem er die Leistung in Anspruch genommen hat. Er kann nach Installation der Software sofort mit der Software arbeiten, ohne vorher eine aufwendige Bestellung abwickeln zu müssen. Die im Nutzungsnachweis bzw. Nutzungsprotokoll gemeldeten Daten können (nach Absprache mit dem Anwender) von dem Anbieter zum Überprüfen des Nutzungsverhaltens des Anwenders ausgewertet werden, um z.B. die Software optimiert weiter zu entwickeln.

Eine rationelle Vorgehensweise, dem Anwender die Weiternutzung der Software zu ermöglichen, besteht darin, dass bei dem Software-Anbieter in einem weiteren Rechner aus dem Sperrcode ein neuer Freigabecode gebildet wird und dass mit Eingabe des neuen Freigabecodes dieser in dem Rechner des Anwenders auf Richtigkeit überprüft wird und bei richtigem Freigabecode dem Anwender ein neues Kontingent zur Verfügung gestellt wird, das entsprechend der Vorgehensweise nach Anspruch 1 abgearbeitet wird.

Für die Handhabung der Softwarenutzung ist es günstig, wenn bei gesetztem Sperrcode ein nutzbarer Funktionsumfang der Software eingeschränkt wird, so dass gewisse Möglichkeiten zur Weiterbearbeitung bestehen.

Für eine gute Übersicht und weitere Auswertemöglichkeiten ist die Maßnahme vorteilhaft, dass in dem Nutzungsnachweis genutzte Softwareteile nach Häufigkeit und/oder Nutzungsdauer registriert werden.

Weitere vorteilhafte Ausgestaltungen des Verfahrens sind in den weiteren Unteransprüchen 5 bis 8 angegeben.

Die Erfindung wird nachfolgend anhand von Ausführungsbeispielen unter Bezugnahme auf die Zeichnungen näher erläutert. Es zeigen:
- Fig. 1: ein Ablaufdiagramm zu einer Software-Installation,
- Fig. 2: ein Ablaufdiagramm zur Anwahl und Ausführung einer kostenpflichtigen Operation mit der Software,
- Fig. 3: ein Ablaufdiagramm zu einer Ausgabe und einem Versand eines Nutzungsprotokolls und Fig. 4 ein Ablaufdiagramm zur Eingabe eines Freigabecodes.

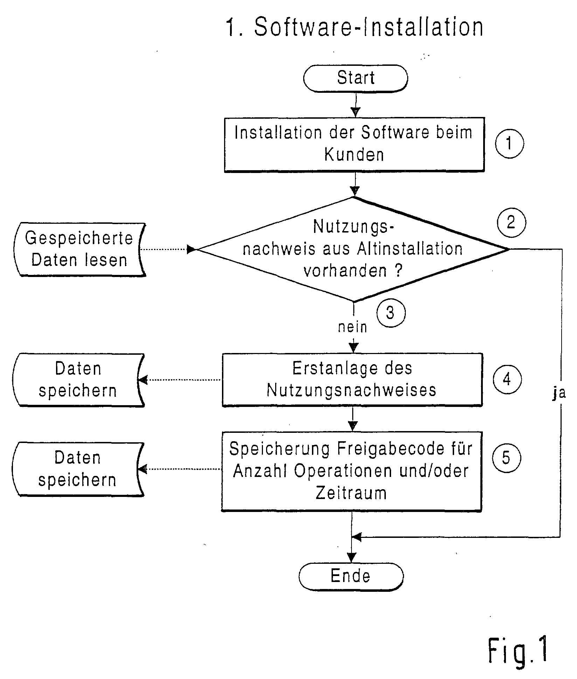

In Fig. 1 ist ein Ablauf bei einer Software-Installation dargestellt. Am Ende der Software-Installation wird in dem Rechner eines Anwenders geprüft, ob in dem Rechner schon ein Nutzungsnachweis aus einer vorangegangenen Installation gespeichert ist. Ist schon ein Nutzungsnachweis vorhanden (Schritt 2), dann ist die Installation beendet. Ist noch kein Nutzungsnachweis vorhanden (Schritt 3), so wird ein leerer Nutzungsnachweis auf dem Rechner des Anwenders neu angelegt (Schritt 4) und ein Freigabecode für eine definierte Anzahl Operationen und/oder einen Nutzungszeitraum erzeugt und gespeichert, für die/den der Anwender den vollen Funktionsumfang nutzen kann. Danach ist die Installation beendet.

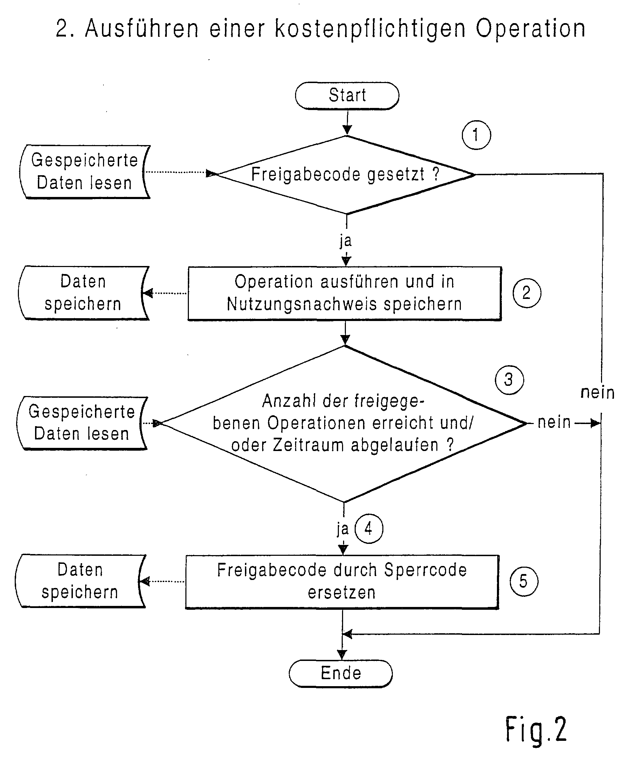

In Fig. 2 ist dargestellt, welcher Ablauf softwareintern stattfindet, wenn der Anwender eine kostenpflichtige Operation aufruft.

Bei der Anwahl einer kostenpflichtigen Operation wird geprüft, ob ein Freigabecode für eine Anzahl Operationen und/oder einen Nutzungszeitraum gespeichert ist. Ist kein Freigabecode gespeichert (Schritt 1), so wird die Operation als nicht ausführbar dargestellt oder ein entsprechender Hinweis ausgegeben. Ist hingegen ein Freigabecode gespeichert, dann wird der Aufruf der Operation ermöglicht, und es werden nach erfolgtem Aufruf durch den Anwender die folgenden Schritte ausgeführt: Die ausgeführte Operation wird im Nutzungsnachweis gespeichert (Schritt 2), und danach wird geprüft, ob die freigegebene Anzahl von Operationen jetzt erreicht ist, bzw. ob der freigegebene Nutzungszeitraum überschritten ist. Ist beides nicht der Fall, dann ist dieser Softwareabschnitt beendet. Wurden mit der aktuellen Operation entweder die Anzahl freigegebener Operationen ausgeführt oder ist der freigegebene Nutzungszeitraum überschritten (Schritt 4), dann wird der gespeicherte Freigabecode durch einen Sperrcode ersetzt, um den Zugriff für weitere Operationen zu verhindern.

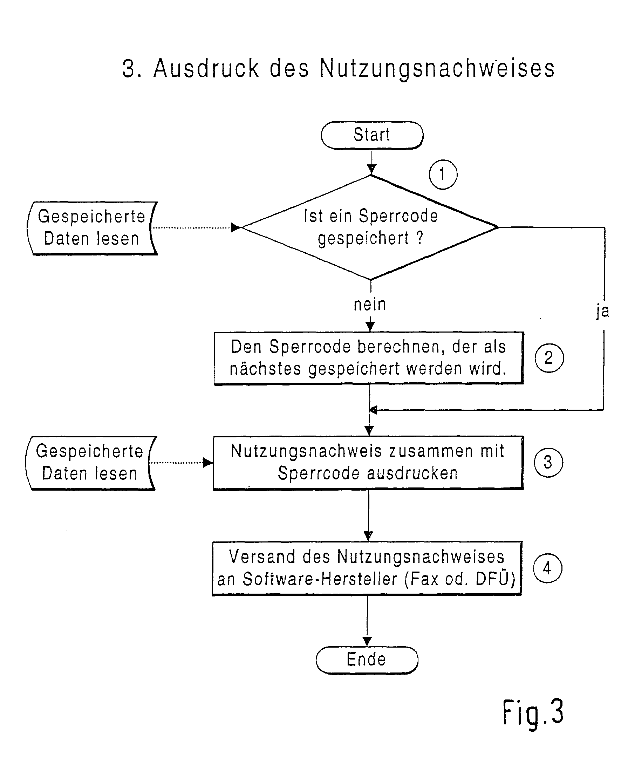

In Fig. 3 ist gezeigt, welche Schritte ablaufen, wenn der Anwender einen Nutzungsnachweis als Nutzungsprotokoll ausgibt, insbesondere ausdruckt, um für einen gespeicherten Sperrcode einen neuen Freigabecode zu beantragen.

Als erstes wird geprüft, ob bereits ein Sperrcode gespeichert ist oder ob noch ein Freigabecode gespeichert ist (Schritt 1). Ist noch kein Sperrcode gespeichert, dann wird der Sperrcode berechnet, der erzeugt werden wird, wenn der aktuell gültige Freigabecode abgelaufen sein wird (Schritt 2), d.h. die freigegebene Anzahl Operationen erreicht sein wird, oder der freigegebene Nutzungszeitraum abgelaufen sein wird. Danach wird der gespeicherte oder der aktuell berechnete Sperrcode zusammen mit den gespeicherten Nutzungen als Nutzungsprotokoll ausgedruckt (Schritt 3). Der erfolgte Ausdruck des Nutzungsnachweises muss nicht im Speicher des Rechners erfasst werden. Um einen zum gespeicherten Sperrcode passenden Freigabecode zu erhalten, muss das Nutzungsprotokoll an den Software-Hersteller versandt werden (z.B. per Fax oder per DFÜ).

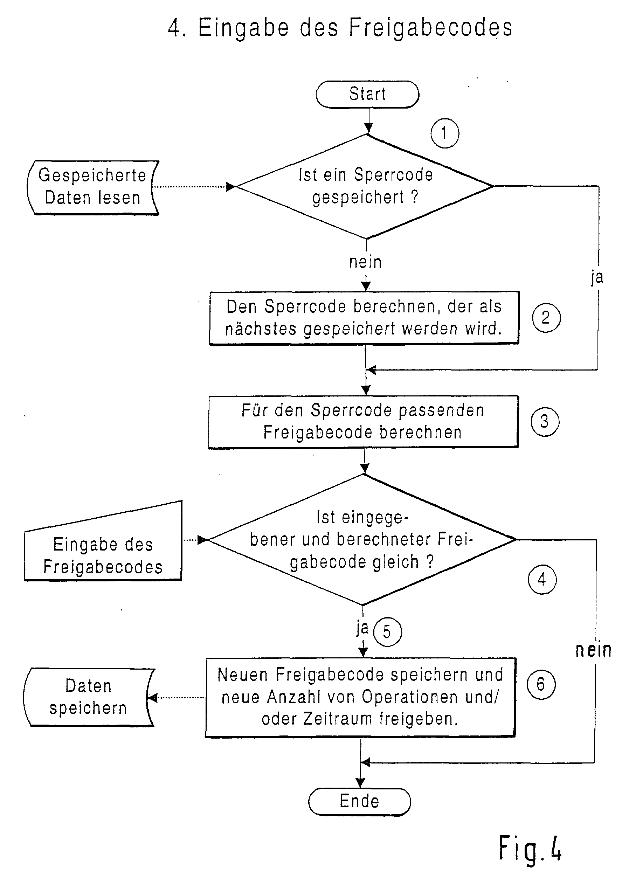

Fig. 4 zeigt den Ablauf, um einen gespeicherten Sperrcode wieder durch einen Freigabecode zu ersetzen bzw. einen noch nicht abgelaufenen Freigabecode durch einen neuen Freigabecode mit einer längeren Laufzeit zu ersetzen. Den Freigabecode hat der Anwender nach Übermittlung eines Nutzungsprotokolls zum Softwarehersteller von diesem zurückerhalten.

Nach Aufruf des entsprechenden Softwareteils bzw. Programmteils wird zuerst geprüft, ob schon ein Sperrcode oder noch ein Freigabecode gespeichert ist (Schritt 1). Ist ein Sperrcode gespeichert, so wird dieser ausgelesen. Ist noch ein Freigabecode gespeichert, dann wird der Sperrcode berechnet, der erzeugt werden wird, wenn der aktuell gültige Freigabecode abgelaufen sein wird (Schritt 2), d.h. die freigegebene Anzahl Operationen erreicht sein wird oder der freigegebene Nutzungszeitraum abgelaufen sein wird. Im nächsten Schritt wird zum ermittelten Sperrcode der zugehörige Freigabecode als Vergleichswert berechnet (Schritt 3). Der Anwender wird jetzt aufgefordert, den vom Softwarehersteller erhaltenen Freigabecode einzugeben, und es erfolgt ein Vergleich mit dem berechneten Vergleichswert. Ist der eingegebene Freigabecode gleich dem berechneten Vergleichswert (Schritt 5), dann wird der bisher gespeicherte Sperrcode oder Freigabecode durch den neu eingegebenen Freigabecode ersetzt (Schritt 6). Entspricht der eingegebene Freigabecode nicht dem berechneten Vergleichswert, dann wird die Eingabe abgewiesen und die gespeicherten Daten werden nicht verändert.

## Patentansprüche

1. Verfahren zum Berechnen von Softwarelizenzen, bei dem in einem mit der Software arbeitenden Rechner bei Benutzung der Software überprüft wird, ob ein zugeteiltes Kontingent noch freie Benutzungsberechtigungen besitzt oder erschöpft ist,
**dadurch gekennzeichnet,**
**dass** als Kontingent von dem Rechner eine Anzahl freigegebener Operationen und/oder ein Nutzungszeitraum zur Verfügung gestellt wird,
**dass** in dem Rechner mit Zuteilung des Kontingents ein Freigabecode wirksam wird und parallel zur Abarbeitung des Kontingents mit Nutzung der Software ein Nutzungsnachweis gespeichert und mit jeder weiteren Nutzung der Software ergänzt wird und
**dass** auf Anforderung eines Anwenders, der Nutzungsnachweis ausgegeben wird, oder bei Erschöpfung des Kontingents von dem Rechner ein Sperrcode erzeugt wird und
**dass** auf dem in Form eines Nutzungsprotokolls ausgegebenen Nutzungsnachweis der Sperrcode vermerkt wird.

2. Verfahren nach Anspruch 1,
**dadurch gekennzeichnet,**
**dass** bei dem Software-Anbieter in einem weiteren Rechner aus dem Sperrcode ein neuer Freigabecode gebildet wird und
**dass** mit Eingabe des neuen Freigabecodes dieser in dem Rechner des Anwenders auf Richtigkeit überprüft wird und bei richtigem Freigabecode dem Anwender ein neues Kontingent zur Verfügung gestellt wird, das entsprechend der Vorgehensweise nach Anspruch 1 abgearbeitet wird.

3. Verfahren nach Anspruch 1 oder 2,
**dadurch gekennzeichnet,**
**dass** bei gesetztem Sperrcode ein nutzbarer Funktionsumfang der Software eingeschränkt wird.

4. Verfahren nach einem der vorhergehenden Ansprüche,
**dadurch gekennzeichnet,**
**dass** in dem Nutzungsnachweis genutzte Softwareteile nach Häufigkeit und/oder Nutzungsdauer registriert werden.

5. Verfahren nach einem der vorhergehenden Ansprüche,
**dadurch gekennzeichnet,**
**dass** nach Installation der Software auf dem Rechner des Anwenders geprüft wird, ob ein Nutzungsnachweis aus einer vorangegangenen Installation gespeichert worden ist,
**dass** die Installation ohne Neuanlage eines Nutzungsnachweises beendet wird, falls bereits ein Nutzungsnachweis vorhanden ist,
**dass** hingegen, wenn noch kein Nutzungsnachweis vorhanden ist, ein leerer Nutzungsnachweis in dem Rechner neu angelegt und ein Freigabecode für eine definierte Anzahl von Operationen und/oder einen Nutzungszeitraum erzeugt und gespeichert wird, für die/den der Anwender die volle Funktionalität nutzen kann, und danach die Installation beendet wird.

6. Verfahren nach einem der vorhergehenden Ansprüche,
**dadurch gekennzeichnet,**
**dass** bei Anwahl einer kostenpflichtigen Operation der Software geprüft wird, ob ein Freigabecode für eine Anzahl Operationen und/oder einen Nutzungszeitraum gespeichert worden ist,
**dass** die angewählte Operation als nicht ausführbar dargestellt oder ein entsprechender Hinweis ausgegeben wird, wenn kein Freigabecode gespeichert worden ist,
**dass** dann, wenn ein Freigabecode gespeichert worden ist, der Aufruf der angewählten Operation ermöglicht wird und nach erfolgtem Aufruf durch den Anwender von dem Rechner die folgenden Schritte ausgeführt werden:
- die ausgeführte Operation wird im Nutzungsnachweis gespeichert und danach wird geprüft, ob die freigegebene Anzahl von Operationen jetzt erreicht ist bzw. ob der freigegebene Nutzungszeitraum überschritten ist,
- dieser Softwareabschnitt wird beendet, wenn beides nicht der Fall ist,
- wurden mit der aktuellen Operation entweder die Anzahl freigegebener Operationen ausgeführt oder ist der freigegebene Nutzungszeitraum überschritten, dann wird der gespeicherte Freigabecode durch einen Sperrcode ersetzt und der Zugriff für weitere Operationen wird verhindert.

7. Verfahren nach einem der vorhergehenden Ansprüche,
**dadurch gekennzeichnet,**
**dass** bei Abruf des Nutzungsprotokolls durch den Anwender folgende Schritte ablaufen:
- als erstes wird geprüft, ob bereits ein Sperrcode oder noch ein Freigabecode gespeichert ist,
- ist noch kein Sperrcode gespeichert, dann wird der Sperrcode berechnet, der erzeugt werden wird, wenn der aktuell gültige Freigabecode infolge Erreichens der Anzahl freigegebener Operationen oder Erschöpfens des Nutzungszeitraums abgelaufen sein wird,
- danach wird der gespeicherte oder der aktuell berechnete Sperrcode zusammen mit gespeicherten Nutzungen als Nutzungsprotokoll ausgegeben,
- auf der Grundlage des auf dem versandten Nutzungsprotokoll vermerkten Sperrcodes wird in dem Rechner des Anwenders ein neuer Freigabecode erzeugt.

8. Verfahren nach einem der vorhergehenden Ansprüche,
**dadurch gekennzeichnet, dass** zum Ersetzen des in dem Rechner des Anwenders gespeicherten Sperrcodes folgende Schritte ablaufen:
- nach Aufruf eines entsprechenden Softwareteils wird überprüft, ob schon ein Sperrcode oder noch ein Freigabecode gespeichert ist,
- ist ein Sperrcode gespeichert, so wird dieser ausgelesen,
- ist noch ein Freigabecode gespeichert, dann wird der Sperrcode berechnet, der erzeugt werden wird, wenn ein aktuell gültiger Freigabecode infolge Erreichens der freigegebenen Anzahl der Operationen oder Erschöpfens des Nutzungszeitraums abgelaufen sein wird,
- zu dem ermittelten Sperrcode wird ein zugehöriger Freigabecode als Vergleichswert berechnet,
- der Anwender wird aufgefordert, den vom Anbieter erhaltenen Freigabecode einzugeben und nach Eingabe erfolgt ein Vergleich mit dem Vergleichswert,
- ist der eingegebene Freigabecode gleich dem berechneten Vergleichswert, dann wird der bisher gespeicherte Sperrcode oder Freigabecode durch den eingegebenen neuen Freigabecode ersetzt,
- entspricht der eingegebene Freigabecode nicht dem berechneten Vergleichswert, dann wird die Eingabe abgewiesen und die gespeicherten Daten werden aufrechterhalten.
